# EUROPÄISCHE PATENTSCHRIFT

(11) **EP 2 481 957 B1**
(45) Veröffentlichungstag und Bekanntmachung des Hinweises auf die Patenterteilung: **13.03.2013**
(21) Anmeldenummer: 11192034.4
(22) Anmeldetag: 06.12.2011
(51) Int. Cl.: F16H 61/30, F16H 63/30, F15B 15/14, F16B 21/18, F16J 1/12

(54) **Schaltvorrichtung eines automatisierten Schaltgetriebes**
Shifting device of an automated gearbox
Dispositif de commutation d'une boîte de vitesses automatisée

(30) Priorität: 28.01.2011 DE 102011003323
(43) Veröffentlichungstag der Anmeldung: 01.08.2012
(73) Patentinhaber: ZF Friedrichshafen AG, 88038 Friedrichshafen (DE)
(72) Erfinder: Fritschle, Ulrich, 88069 Tettnang (DE); Stracke, Ulrich, 88046 Friedrichshafen (DE)

(56) Entgegenhaltungen:
- DE-A1- 3 731 949
- DE-A1-102005 026 475
- DE-A1-102006 030 450

## Beschreibung

Die Erfindung betrifft eine Schaltvorrichtung eines automatisierten Schaltgetriebes, mit mindestens einer axial verschiebbaren Schaltstange und einem endseitig an der Schaltstange befestigten Stellkolben eines hydraulischen oder pneumatischen Stellzylinders, wobei der Stellkolben mit einer Zentralbohrung auf einem endseitigen Zylinderschaft der Schaltstange sitzt, axial innen an einer Anschlagfläche der Schaltstange anliegt, und axial außen mittels eines in eine Sicherungsnut eingesetzten Sicherungsrings und einer zwischen dem Sicherungsring sowie einer äußeren Stirnwand des Stellkolbens angeordneten Stützscheibe axial fixiert ist.

Zur Schaltung der Gänge von in Vorgelegebauweise ausgeführten Schaltgetrieben werden häufig Schaltstangen verwendet, die achsparallel zu den Getriebewellen angeordnet sind und jeweils mit einer starr befestigten Schaltgabel versehen sind oder über einen Mitnehmer mit einer schwenkbaren Schaltschwinge in Wirkverbindung stehen. Die Schaltgabeln oder Schaltschwingen stehen jeweils mit einer Schaltmuffe eines auf einer Getriebewelle angeordneten Schaltpaketes in Eingriff, das jeweils die Gangkupplungen von zumeist zwei zugeordneten Gängen umfasst, durch welche die Losräder der zugeordneten Gangradsätze mit der betreffenden Getriebewelle drehfest koppelbar bzw. entkoppelbar sind. Durch eine Axialverschiebung einer Schaltstange kann das zugeordnete Schaltpaket somit in zwei äußere Schaltstellungen, in denen jeweils einer der beiden zugeordneten Gänge eingelegt ist, und in eine mittlere Neutralstellung, in der beide zugeordneten Gänge ausgelegt sind, verschoben werden. Bei automatisierten Schaltgetrieben können die Schaltschienen über einfachwirksame oder doppeltwirksame Kolben-Zylinder-Anordnungen betätigt werden, die beispielsweise in einer Gehäusewand des Getriebegehäuses angeordnet sind, und deren Stellkolben endseitig an der jeweiligen Schaltstange befestigt sind.

Aus der DE 195 43 646 A1 ist eine entsprechende Schaltvorrichtung eines automatisierten Schaltgetriebes bekannt, bei welcher der Stellkolben mit einer Zentralbohrung auf einem endseitigen, mit einem Außengewinde versehenen Zylinderschaft der Schaltstange sitzt, axial innen an einer Anschlagfläche der Schaltstange anliegt, und axial außen mittels einer selbstsichernden Mutter auf dem Zylinderschaft fixiert ist. Die Verschraubung des Stellkolbens an der Schaltstange ist jedoch mit einem relativ hohen Montageaufwand verbunden.

Dagegen ist aus der DE 103 47 493 A1 ein automatisiertes Schaltgetriebe bekannt, dessen Schaltvorrichtung mindestens ein Schaltstange mit einem endseitig befestigten Stellkolben umfasst. Der Stellkolben sitzt mit einer Zentralbohrung auf einem endseitigen Zylinderschaft der Schaltstange, liegt axial innen an einer Anschlagfläche der Schaltstange an, und ist axial außen mittels eines in eine Sicherungsnut eingesetzten Sicherungsrings und einer zwischen dem Sicherungsring und einer äußeren Stirnwand des Stellkolbens angeordneten Stützscheibe auf dem Zylinderschaft fixiert. Diese Bauweise stellt insbesondere bei einer induktionsgehärteten Schaltstange eine praktikable, d.h. kostengünstige und Platz sparende Befestigungsart dar. Da der Sicherungsring und die Stützscheibe nach dem Aufschieben des Stellkolbens auf den Zylinderschaft aber einzeln montiert werden müssen, ist der Montageaufwand vergleichsweise hoch. Außerdem ist der verwendete, als Stanzbauteil ausgeführte Standard-Sicherungsring relativ filigran und daher nur begrenzt belastbar.

Aus der DE 10 2006 030 450 A1 ist eine Schaltvorrichtung gemäß dem Oberbegriff des unabhängigen Anspruchs 1 bekannt.

Der Erfindung liegt daher die Aufgabe zugrunde, eine Schaltvorrichtung eines automatisierten Schaltgetriebes der eingangs genannten Art vorzuschlagen, bei welcher der Montageaufwand des Stellkolbens verringert und die Verbindung zwischen dem Stellkolben und der Schaltstange höher als bisher belastbar ist.

Diese Aufgabe ist in Verbindung mit den Merkmalen des Oberbegriffs des Anspruchs 1 dadurch gelöst, dass der Stellkolben mit einer Montagehülse zur Vormontage des Sicherungsrings und der Stützscheibe versehen ist, dass die Montagehülse axial außen an dem Stellkolben angeordnet ist und eine umfangsseitige Montageöffnung sowie eine innere Montagenut zur Aufnahme des Sicherungsrings und der Stützscheibe aufweist, und dass der Zylinderschaft einen äußeren Montagekonus zur Montage des zuvor mit dem Sicherungsring und der Stützscheibe versehenen Stellkolbens aufweist.

Vorteilhafte Ausgestaltungen und Weiterbildungen der erfindungsgemäßen Schaltvorrichtung sind Gegenstand der Unteransprüche.

Die Erfindung geht demnach aus von einer an sich bekannten Schaltvorrichtung eines automatisierten Schaltgetriebes, die mindestens eine axial verschiebbare Schaltstange und einen endseitig an der Schaltstange befestigten Stellkolben eines hydraulischen oder pneumatischen Stellzylinders aufweist. Der Stellkolben sitzt mit einer Zentralbohrung auf einem endseitigen Zylinderschaft der Schaltstange, liegt axial innen an einer Anschlagfläche der Schaltstange an, und ist axial außen mittels eines in eine Sicherungsnut eingesetzten Sicherungsrings und einer zwischen dem Sicherungsring sowie einer äußeren Stirnwand des Stellkolbens angeordneten Stützscheibe axial fixiert.

Zur Vereinfachung der Montage ist erfindungsgemäß vorgesehen, dass der Stellkolben mit einer Montagehülse versehen ist, die axial außen an dem Stellkolben angeordnet ist und eine umfangsseitige Montageöffnung sowie eine innere Montagenut zur Aufnahme des Sicherungsrings und der Stützscheibe aufweist. Zudem weist der Zylinderschaft einen äußeren Montagekonus zur Montage des zuvor mit dem Sicherungsring und der Stützscheibe versehenen Stellkolbens auf.

Während bislang der Stellkolben und die Stützscheibe bei der Montage nacheinander auf den Zylinderschaft aufgeschoben wurden, und danach der Sicherungsring in die Sicherungsnut eingesetzt wurde, ist es nunmehr möglich, die Stützscheibe und den Sicherungsring zuvor durch die Montageöffnung in die Montagenut der bevorzugt einstückig an den Stellkolben angeformten Montagehülse einzulegen und den derart vormontierten Stellkolben gemeinsam mit der Stützscheibe und dem Sicherungsring über den Montagekonus auf den Zylinderschaft aufzuschieben, bis der Stellkolben an die Anschlagfläche der Schaltstange anstößt, und der Sicherungsring in die Sicherungsnut einrastet. Die Montage des Stellzylinders an der Schaltstange ist damit gegenüber den bisher bekannten Konstruktionen einfacher, schneller sowie sicherer durchführbar, und somit produktionstechnisch deutlich verbessert.

Um die Stützscheibe verklemmungsfrei und verliersicher in der Montagehülse vorzumontieren, kann vorgesehen sein, dass die äußere Stirnwand des Stellkolbens mit einer axialen Zentriernut zur teilweisen Aufnahme der Stützscheibe versehen ist, und dass die axiale Breite der Montagenut kleiner als die gemeinsame axiale Dicke des Sicherungsrings und der Stützscheibe ist. Hierdurch ist sichergestellt, dass die Stützscheibe bei der Vormontage nach dem Einlegen in die Montagenut zunächst axial in die Zentriernut verschoben wird, und dort bezüglich der Zentralbohrung des Stellkolbens zentriert sowie nach dem Einlegen des Sicherungsrings in die Montagenut verliersicher gehalten wird.

Damit auch der Sicherungsring nach der Vormontage verliersicher in der Montagenut der Montagehülse gehalten wird, ist es zudem vorteilhaft, wenn die umfangsseitige Innenweite der Montageöffnung geringfügig kleiner als der Außendurchmesser des Sicherungsrings ist. Hierdurch ist es zwar erforderlich, den Sicherungsring beim Einsetzen in die Montagenut der Montagehülse mit einem Werkzeug leicht zusammenzudrücken. Nach dem Einsetzen kann der Sicherungsring jedoch nicht mehr selbsttätig, d.h. ohne den Einsatz eines Werkzeugs, durch die Montageöffnung aus der Montagehülse entweichen.

Um bei der Montage und Demontage des Stellkolbens ein Verklemmen der Stützscheibe in der Sicherungsnut des Zylinderschafts zu vermeiden, ist die Dicke der Stützscheibe bevorzugt größer als die axiale Breite der Sicherungsnut.

Zur Erhöhung der Belastbarkeit der Verbindung zwischen dem Stellkolben und der Schaltstange ist der Sicherungsring bevorzugt als ein Umformteil mit vergrößerter Stirnfläche und mit endseitigen Montagehaken zum Ansetzen einer Montagezange hergestellt. Der Sicherungsring mit vergrößerter Stirnfläche kann auch als Stanzteil gefertigt werden.

Zur Vereinfachung einer Demontage des Stellkolbens kann die Montagehülse auch mit einer äußeren Demontagenut zum Ansetzen eines Ausziehwerkzeugs versehen sein, so dass der Stellkolben nach dem Öffnen des Sicherungsrings mit dem Ausziehwerkzeug einfach von dem Zylinderschaft einer Schaltstange abgezogen werden kann.

Zur Verdeutlichung der Erfindung ist der Beschreibung eine Zeichnung mit einem Ausführungsbeispiel beigefügt. In dieser zeigt
Fig. 1 den Endbereich einer Schaltstange mit einem Stellzylinder und einem Stellkolben einer erfindungsgemäßen Schaltvorrichtung in einem Längsmittelschnitt A-A nach Fig. 2, und
Fig. 2 denselben Endbereich der Schaltstange mit dem Stellzylinder und dem Stellkolben der erfindungsgemäßen Schaltvorrichtung nach Fig. 1 in einem Radialschnitt B-B nach Fig. 1.

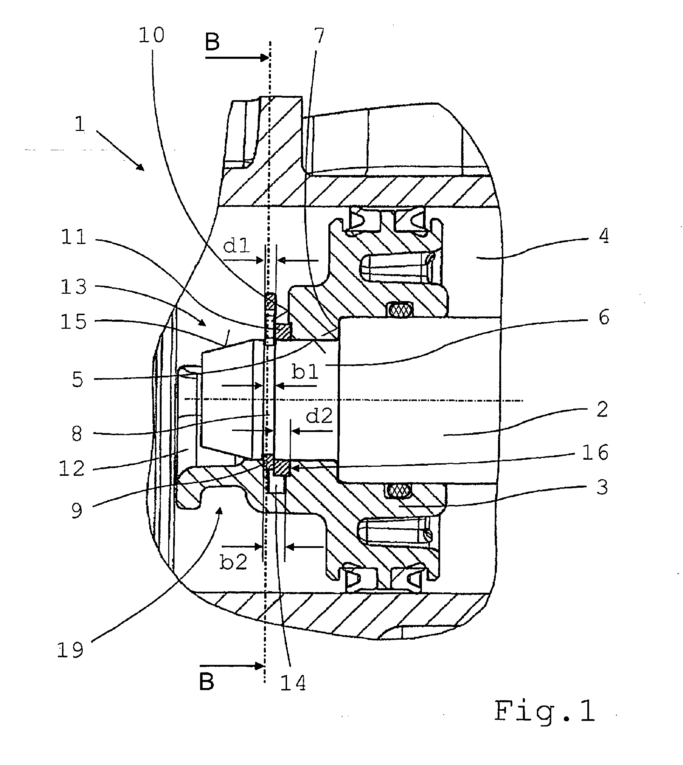

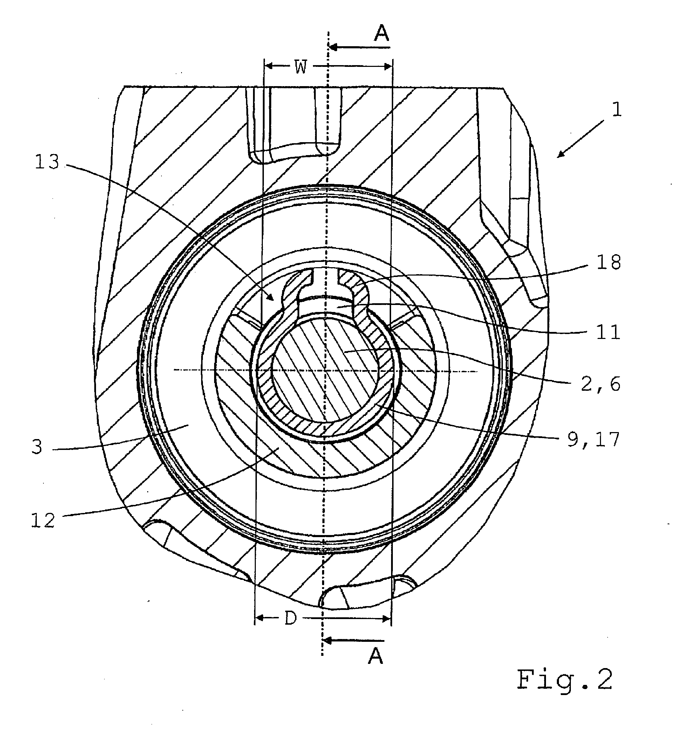

Der in Fig. 1 und Fig. 2 abgebildete Ausschnitt einer erfindungsgemäßen Schaltvorrichtung 1 zeigt eine axial verschiebbare Schaltstange 2 und einen endseitig an der Schaltstange 2 befestigten Stellkolben 3 eines hydraulischen oder pneumatischen Stellzylinders 4. Der Stellkolben 3 sitzt mit einer Zentralbohrung 5 auf einem endseitigen Zylinderschaft 6 der Schaltstange 2, liegt axial innen an einer Anschlagfläche 7 der Schaltstange 2 an, und ist axial außen mittels eines in eine Sicherungsnut 8 eingesetzten Sicherungsrings 9 und einer zwischen dem Sicherungsring 9 und einer äußeren Stirnwand 10 des Stellkolbens 3 angeordneten Stützscheibe 11 axial fixiert.

Zur Vormontage des Sicherungsrings 9 und der Stützscheibe 11 ist der Stellkolben 3 mit einer Montagehülse 12 versehen, die axial außen einstückig an dem Stellkolben 3 angeformt ist und eine umfangsseitige Montageöffnung 13 sowie eine innere Montagenut 14 zur Aufnahme des Sicherungsrings 9 und der Stützscheibe 11 aufweist. Zudem ist der Zylinderschaft 6 mit einem äußeren Montagekonus 15 zur Montage des zuvor mit dem Sicherungsring 9 und der Stützscheibe 11 versehenen Stellkolbens 3 versehen.

Die äußere Stirnwand 10 des Stellkolbens 3 ist mit einer axialen Zentriernut 16 zur teilweisen Aufnahme der Stützscheibe 11 versehen, und die axiale Breite b2 der Montagenut 14 ist kleiner als die gemeinsame axiale Dicke (d1 + d2) des Sicherungsrings 9 und der Stützscheibe 11 (b2 < d1 + d2). Hierdurch ist sichergestellt, dass die Stützscheibe 11 bei der Vormontage nach dem Einlegen in die Montagenut 14 zunächst axial in die Zentriernut 16 verschoben wird, und dort bezüglich der Zentralbohrung 5 des Stellkolbens 3 zentriert sowie nach dem Einlegen des Sicherungsrings 9 in die Montagenut 14 verliersicher gehalten wird.

Die umfangsseitige Innenweite W der Montageöffnung 13 ist geringfügig kleiner als der Außendurchmesser D des Sicherungsrings 9. Hierdurch kann der Sicherungsring 9 nach dem Einsetzen in die Montagenut 14, das unter leichter Vorspannung erfolgen muss, nicht mehr selbsttätig durch die Montageöffnung 13 aus der Montagehülse 12 entweichen.

Die Dicke d2 der Stützscheibe 11 ist größer als die axiale Breite b1 der Sicherungsnut 8 (d2 > b1), um ein Verklemmen der Stützscheibe 11 in der Sicherungsnut 8 des Zylinderschafts 6 bei der Montage und Demontage des Stellkolbens 3 zu vermeiden.

Zur Erhöhung der Belastbarkeit der Verbindung zwischen dem Stellkolben 3 und der Schaltstange 2 ist der Sicherungsring 9 als ein Umformteil mit vergrößerter Stirnfläche 17 und mit endseitigen Montagehaken 18 zum Ansetzen einer Montagezange hergestellt.

Zur Vereinfachung einer Demontage des Stellkolbens 3 ist die Montagehülse 12 mit einer äußeren Demontagenut 19 zum Ansetzen eines Ausziehwerkzeugs versehen.

Die Montage des Stellkolbens 3 an der Schaltstange 2 erfolgt derart, dass bei einer Vormontage zunächst die Stützscheibe 11 über die Montageöffnung 13 in die Montagenut 14 der Montagehülse 12 eingelegt und axial in die Zentriernut 16 der Stirnwand 10 des Stellkolbens 3 verschoben wird, und dann der Sicherungsring 9 über die Montageöffnung 13 in die Montagenut 14 eingelegt wird. Daraufhin wird der Stellkolben 3 zusammen mit den vormontierten Bauteilen, d.h. der Stützscheibe 11 und dem Sicherungsring 9, über den Montagekonus 15 auf den Zylinderschaft 6 der Schaltstange 2 aufgeschoben, bis der Stellkolben 3 an die Anschlagfläche 7 der Schaltstange 2 anstößt und der Sicherungsring 9 in die Sicherungsnut 8 der Schaltstange 2 einrastet.

Gegenüber ähnlich ausgeführten Schaltvorrichtungen ist die Montage des Stellzylinders 3 bei der beschriebenen Ausführung der Schaltvorrichtung 1 gemäß der Erfindung einfacher, schneller sowie sicherer durchführbar, und somit produktionstechnisch deutlich verbessert.

### Bezugszeichen

- 1: Schaltvorrichtung
- 2: Schaltstange
- 3: Stellkolben
- 4: Stellzylinder
- 5: Zentralbohrung
- 6: Zylinderschaft
- 7: Anschlagfläche
- 8: Sicherungsnut
- 9: Sicherungsring
- 10: Stirnwand
- 11: Stützscheibe
- 12: Montagehülse
- 13: Montageöffnung
- 14: Montagenut
- 15: Montagekonus
- 16: Zentriernut
- 17: Stirnfläche
- 18: Montagehaken
- 19: Demontagenut
- b1: Breite der Sicherungsnut
- b2: Breite der Montagenut
- d1: Dicke des Sicherungsrings
- d2: Dicke der Stützscheibe
- D: Außendurchmesser des Sicherungsrings
- W: Innenweite der Montageöffnung

## Patentansprüche

1. Schaltvorrichtung eines automatisierten Schaltgetriebes, mit mindestens einer axial verschiebbaren Schaltstange (2) und einem endseitig an der Schaltstange (2) befestigten Stellkolben (3) eines hydraulischen oder pneumatischen Stellzylinders (4), wobei der Stellkolben (3) mit einer Zentralbohrung (5) auf einem endseitigen Zylinderschaft (6) der Schaltstange (2) sitzt, axial innen an einer Anschlagfläche (7) der Schaltstange (2) anliegt, und axial außen mittels eines in eine Sicherungsnut (8) eingesetzten Sicherungsrings (9) und einer zwischen dem Sicherungsring (9) und einer äußeren Stirnwand (10) des Stellkolbens (3) angeordneten Stützscheibe (11) axial fixiert ist, **dadurch gekennzeichnet, dass** der Stellkolben (3) mit einer Montagehülse (12) zur Vormontage des Sicherungsrings (9) und der Stützscheibe (11) versehen ist, dass die Montagehülse (12) axial außen an dem Stellkolben (3) angeordnet ist und eine umfangsseitige Montageöffnung (13) sowie eine innere Montagenut (14) zur Aufnahme des Sicherungsrings (9) und der Stützscheibe (11) aufweist, und dass der Zylinderschaft (6) einen äußeren Montagekonus (15) zur Montage des zuvor mit dem Sicherungsring (9) und der Stützscheibe (11) versehenen Stellkolbens (3) aufweist.

2. Schaltvorrichtung nach Anspruch 1, **dadurch gekennzeichnet, dass** die äußere Stirnwand (10) des Stellkolbens (3) mit einer axialen Zentriernut (16) zur teilweisen Aufnahme der Stützscheibe (11) versehen ist, und dass die axiale Breite (b2) der Montagenut (14) kleiner als die gemeinsame axiale Dicke (d1 + d2) des Sicherungsrings (9) und der Stützscheibe (11) ist (b2 < d1 + d2).

3. Schaltvorrichtung nach Anspruch 1 oder 2, **dadurch gekennzeichnet, dass** die umfangsseitige Innenweite (W) der Montageöffnung (13) geringfügig kleiner als der Außendurchmesser (D) des Sicherungsrings (9) ist (W < D).

4. Schaltvorrichtung nach wenigstens einem der Ansprüche 1 bis 3, **dadurch gekennzeichnet, dass** die Dicke (d2) der Stützscheibe (11) größer als die axiale Breite (b1) der Sicherungsnut (8) ist (d2 > b1).

5. Schaltvorrichtung nach wenigstens einem der Ansprüche 1 bis 4, **dadurch gekennzeichnet, dass** der Sicherungsring (9) als ein Umformteil oder Stanzteil mit vergrößerter Stirnfläche (17) und mit endseitigen Montagehaken (18) zum Ansetzen einer Montagezange hergestellt ist.

6. Schaltvorrichtung nach wenigstens einem der Ansprüche 1 bis 5, **dadurch gekennzeichnet, dass** die Montagehülse (12) mit einer äußeren Demontagenut (19) zum Ansetzen eines Ausziehwerkzeugs versehen ist.

## Claims

1. Shift device of an automated shift gearbox, having at least one axially displaceable shift rod (2) and having a control piston (3), which is fastened to the end of the shift rod (2), of a hydraulic or pneumatic control cylinder (4), wherein the control piston (3) is seated with a central bore (5) on a cylindrical shank (6) on the end of the shift rod (2), bears axially at the inside against an abutment surface (7) of the shift rod (2), and axially at the outside is fixed axially by means of a locking ring (9) inserted into a locking groove (8) and by means of a support disc (11) arranged between the locking ring (9) and an outer front wall (10) of the control piston (3), **characterized in that** the control piston (3) is provided with a mounting sleeve (12) for the pre-mounting of the locking ring (9) and of the support disc (11), **in that** the mounting sleeve (12) is arranged axially at the outside on the control piston (3) and has a circumferential mounting opening (13) and an inner mounting groove (14) for receiving the locking ring (9) and the support disc (11), and **in that** the cylindrical shank (6) has an outer mounting cone (15) for the mounting of the control piston (3) which has already been equipped with the locking ring (9) and the support disc (11).

2. Shift device according to Claim 1, **characterized in that** the outer front wall (10) of the control piston (3) is provided with an axial centring groove (16) for partially receiving the support disc (11), and **in that** the axial width (b2) of the mounting groove (14) is smaller than the combined axial thickness (d1 + d2) of the locking ring (9) and the support disc (11) (b2 < d1 + d2).

3. Shift device according to Claim 1 or 2, **characterized in that** the circumferential inner width (W) of the mounting opening (13) is slightly smaller than the outer diameter (D) of the locking ring (9) (W < D).

4. Shift device according to at least one of Claims 1 to 3, **characterized in that** the thickness (d2) of the support disc (11) is greater than the axial width (b1) of the locking groove (8) (d2 > b1).

5. Shift device according to at least one of Claims 1 to 4, **characterized in that** the locking ring (9) is produced as a formed part or punched part having an enlarged front face (17) and having, on the ends, mounting hooks (18) for the engagement of mounting pliers.

6. Shift device according to at least one of Claims 1 to 5, **characterized in that** the mounting sleeve (12) is provided with an outer dismounting groove (19) for the engagement of a removal tool.

## Revendications

1. Dispositif de changement de vitesse d'une boîte de vitesses automatisée, comprenant au moins une tige de changement de vitesse (2) déplaçable axialement et un piston de commande (3), fixé à l'extrémité de la tige de changement de vitesse (2), d'un cylindre de commande hydraulique ou pneumatique (4), le piston de commande (3) reposant avec un alésage central (5) sur une tige de cylindre (6) du côté de l'extrémité de la tige de changement de vitesse (2), s'appliquant axialement à l'intérieur contre une face de butée (7) de la tige de changement de vitesse (2), et étant fixé axialement à l'extérieur au moyen d'une bague de fixation (9) insérée dans une rainure de fixation (8) et d'une rondelle de support (11) disposée entre la bague de fixation (9) et une paroi frontale extérieure (10) du piston de commande (3), **caractérisé en ce que** le piston de commande (3) est pourvu d'une douille de montage (12) pour le prémontage de la bague de fixation (9) et de la rondelle de support (11), **en ce que** la douille de montage (12) est disposée axialement à l'extérieur sur le piston de commande (3) et présente une ouverture de montage du côté périphérique (13) ainsi qu'une rainure de montage intérieure (14) pour recevoir la bague de fixation (9) et la rondelle de support (11), et **en ce que** la tige de cylindre (6) présente un cône de montage extérieur (15) pour le montage du piston de commande (3) préalablement pourvu de la bague de fixation (9) et de la rondelle de support (11).

2. Dispositif de changement de vitesse selon la revendication 1, **caractérisé en ce que** la paroi frontale extérieure (10) du piston de commande (3) est pourvue d'une rainure de centrage axiale (16) pour recevoir en partie la rondelle de support (11), et **en ce que** la largeur axiale (b2) de la rainure de montage (14) est inférieure à l'épaisseur axiale commune (d1 + d2) de la bague de fixation (9) et de la rondelle de support (11) (b2 < d1 + d2).

3. Dispositif de changement de vitesse selon la revendication 1 ou 2, **caractérisé en ce que** la largeur intérieure périphérique (W) de l'ouverture de montage (13) est légèrement inférieure au diamètre extérieur (D) de la bague de fixation (9) (W < D).

4. Dispositif de changement de vitesse selon au moins l'une quelconque des revendications 1 à 3, **caractérisé en ce que** l'épaisseur (d2) du disque de support (11) est supérieure à la largeur axiale (b1) de la rainure de fixation (8) (d2 > b1).

5. Dispositif de changement de vitesse selon au moins l'une quelconque des revendications 1 à 4, **caractérisé en ce que** la bague de fixation (9) est réalisée sous forme de pièce façonnée ou de pièce estampée avec une surface frontale agrandie (17) et avec des crochets de montage (18) aux extrémités afin de placer une pince de montage.

6. Dispositif de changement de vitesse selon au moins l'une quelconque des revendications 1 à 5, **caractérisé en ce que** la douille de montage (12) est pourvue d'une rainure de démontage extérieure (19) pour placer un outil d'extraction.
